(19) Europäisches Patentamt / European Patent Office / Office européen des brevets

(11) **EP 2 594 443 B1**

(12) **FASCICULE DE BREVET EUROPEEN**

(45) Date de publication et mention
de la délivrance du brevet:
**25.05.2016 Bulletin 2016/21**

(21) Numéro de dépôt: **12290356.0**

(22) Date de dépôt: **18.10.2012**

(51) Int Cl.:
*B60W 20/10* (2016.01)   *B60W 20/16* (2016.01)
*B60W 10/06* (2006.01)   *B60W 10/08* (2006.01)
*B60W 20/00* (2016.01)   *B60W 30/188* (2012.01)
*F02D 41/14* (2006.01)

(54) **PROCÉDÉ DE COMMANDE D'UN SYSTÈME DE PROPULSION HYBRIDE D'UN VÉHICULE EN REGIME TRANSITOIRE**

VERFAHREN ZUR STEUERUNG EINES HYBRIDANTRIEBES WÄHREND EINES ÜBERGANGSVERHALTENS

METHOD FOR CONTROLLING A VEHICLE HYBRID PROPULSION SYSTEM DURING TRANSIENT BEHAVIOUR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2011 FR 1103497**

(43) Date de publication de la demande:
**22.05.2013 Bulletin 2013/21**

(73) Titulaire: **IFP Énergies nouvelles**
**92852 Rueil-Malmaison Cedex (FR)**

(72) Inventeurs:
• **Thibault, Laurent**
 **92400 Courbevoie (FR)**
• **Grondin, Olivier**
 **92270 Bois-Colombes (FR)**
• **Corde, Gilles**
 **91430 Igny (FR)**
• **Querel, Carole**
 **92500 Rueil-Malmaison (FR)**
• **Moulin, Philippe**
 **75015 Paris (FR)**

(56) Documents cités:
**WO-A1-2006/056702      FR-A1- 2 926 518**
**US-A1- 2006 270 519**

• **OLIVIER GRONDIN ET AL: "Energy management strategy for Diesel hybrid electric vehicle", VEHICLE POWER AND PROPULSION CONFERENCE (VPPC), 2011 IEEE, IEEE, 6 septembre 2011 (2011-09-06), pages 1-8, XP031974922, DOI: 10.1109/VPPC.2011.6043132 ISBN: 978-1-61284-248-6**

**Description**

La présente invention concerne le domaine du contrôle moteur et plus particulièrement le contrôle en régime transitoire d'un système de propulsion hybride d'un véhicule, dans le but de réduire les émissions polluantes.

Un véhicule hybride est un véhicule comprenant au moins une machine électrique et un moteur thermique pour assurer la traction du véhicule.

La prise en compte des émissions polluantes en régime transitoire (engendré par le passage d'un point de fonctionnement stabilisé à un autre point de fonctionnement stabilisé) d'un moteur à combustion interne constitue un objectif très important. En effet, les émissions polluantes des moteurs actuels sont très sensibles aux écarts de fonctionnement. De plus, les futurs cycles de conduite d'homologation imposeront plus de phases transitoires. Dans le cas d'un véhicule hybride équipé d'un moteur Diesel, la problématique est double : d'une part, il faut trouver un compromis entre les émissions de NOx (oxydes d'azote, polluants émis par le moteur thermique) et la consommation de carburant pour le point de fonctionnement stabilisé, et d'autre part, il faut gérer les phases de fonctionnement transitoires du moteur, pendant lesquelles on observe des pics d'émission de NOx.

US2006/0270519 divulgue un procédé de commande d'un système de propulsion hybride, constitué d'au moins une machine électrique et d'au moins un moteur Diesel, dans lequel on acquiert une consigne de couple dudit moteur Diesel, réalisant les étapes suivantes :

-   on construit un modèle d'émissions d'oxydes d'azote permettant d'estimer les émissions dudit moteur Diesel en fonction d'un couple dudit moteur Diesel ;
-   on détermine une consigne de couple de ladite machine électrique et du moteur Diesel ; et
-   on applique les consignes de couple dynamiques audit système de propulsion.

La demande de brevet FR 2926518 divulgue un procédé de commande d'un moteur hybride comprenant un moteur électrique accouplé à un moteur à combustion interne. Le procédé est basé sur le maintien continu du moteur à combustion interne à des points de fonctionnement définis, de manière à limiter les émissions d'oxyde d'azote.

Un exemple illustrant la problématique des émissions en transitoire est donné sur les figues 1a) à 1d). Cet exemple représente la première accélération de la partie extra urbaine d'un cycle de conduite de type NEDC (New European Driving Cycle, qui est un cycle de conduite automobile conçu pour imiter de façon reproductible les conditions rencontrées sur les routes européennes, principalement utilisé pour la mesure de la consommation et des émissions polluantes des véhicules) pour un système de propulsion hybride, équipé d'un système de recirculation des gaz d'échappement (EGR). Lors des phases de changement de rapports de boite de vitesse, la coupure d'injection entraîne nécessairement la diminution de la richesse à l'échappement. Par conséquent la disponibilité des gaz brûlés à l'admission est limitée lors du rétablissement de l'injection au moment de l'accélération. Dans ce cas, la convergence de la fraction de gaz brûlés à l'admission sur sa consigne n'est pas instantanée. Son temps de réponse dépend du temps de transport des gaz brûlés dans le circuit EGR. Durant les phases transitoires, la composition des gaz à l'admission (et donc dans le cylindre) ne converge pas sur sa consigne et les émissions de NOx dépassent les émissions des régimes statiques. L'amplitude de ces pics d'émissions est importante par rapport aux niveaux attendus en régime stabilisé et ces pics représentent, selon le type de cycle de conduite, une part non négligeable des émissions cumulées.

Sur un cycle de conduite européen (NEDC) la part transitoire n'excède pas 15 % des émissions totales de NOx. En revanche, pour un cycle de conduite américain de type FTP (pour Federal Test Procedure, qui est un cycle de conduite utilisé aux Etats-Unis pour la mesure des émissions polluantes), la part transitoire représente plus de 40 % des émissions totales comme l'indique le Tableau 1. Ce tableau 1 représente une comparaison entre les émissions de NOx mesurées et les émissions de NOx quasi-statiques pour deux cycles de conduite (NEDC et FTP) et la part transitoire des émissions totales pour chacun des cycles.

Tableau 1

|  | CYCLE DE CONDUITE | | | | | |
|---|---|---|---|---|---|---|
|  | NEDC | | | FTP | | |
|  | Expérience | Statique | Part transitoire | Expérience | Statique | Part transitoire |
| NOx [mg/km] | 109 | 90 | 15 % | 170 | 100 | 42 % |
| Consommation [l/100km] | 4,5 | 4,3 | 3 % | 4,7 | 4,4 | 6 % |

Par conséquent, la prise en compte de la part transitoire constitue un enjeu important du contrôle du moteur. Dans ce contexte, l'hybridation du moteur thermique représente une solution avec un fort potentiel. L'idée consiste à limiter les sollicitations du moteur thermique en régime transitoire en utilisant la machine électrique ou un alterno-démarreur pour compenser la consigne de couple du moteur thermique.

Pour commander un tel système de propulsion hybride, il a été développé des superviseurs énergétiques. Il existe plusieurs méthodes reposant sur la commande optimale. Ce type de superviseur énergétique est présenté dans les documents suivants :

- A. Sciarretta, M. Back & L. Guzzella, "Optimal control of parallel hybrid electric vehicles", IEEE Transactions on Control Systems Technology, vol. 12, no. 3, May 2004.
- A. Chasse, A. Sciarretta & J. Chauvin , "Online optimal control of a parallel hybrid with costate adaptation rule", Proceedings of the IFAC Symposium on Advances in Automotive Control, Munich, Germany, July 12-14, 2010.
- O. Grondin, L. Thibault, Ph. Moulin, A. Chasse & A. Sciarretta, "Energy Management Strategy for Diesel Hybrid Electric Vehicle", Proceedings of the 7th IEEE Vehicle Power and Propulsion Conference, Chicago, USA, 6-9 September 2011.

Toutefois, bien que ces superviseurs énergétiques permettent de gérer les régimes statiques du système de propulsion hybride, ils ne sont pas adaptés à la gestion des régimes transitoires.

Le moteur thermique y est considéré comme un système purement quasi-statique. Cette hypothèse est acceptable si on considère le couple moteur mais elle s'avère fausse si on considère les émissions polluantes. Ainsi, la part des émissions produites lors des phases de fonctionnement transitoires par rapport aux émissions totales n'est pas négligeable. C'est pourquoi il est nécessaire de prendre en compte la transition entre deux points stabilisés choisis par le superviseur statique.

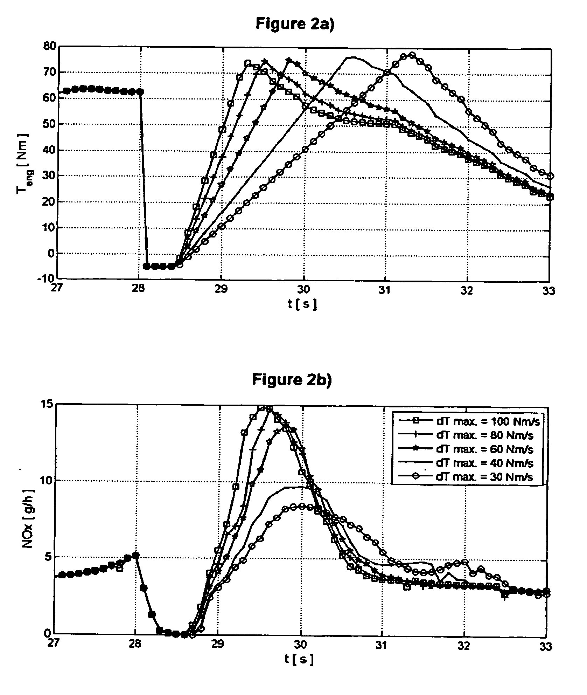

Les figures 2a) et 2b) montrent l'impact du gradient de couple sur les émissions de NOx. Pour gérer les phases de fonctionnement transitoires du moteur, pendant lesquelles des pics d'émissions polluantes sont émis, des méthodes heuristiques visant à limiter la valeur du gradient de couple demandé au moteur thermique, tout en utilisant la machine électrique pour fournir le couple manquant et satisfaire la consigne à la roue ont été développées. Ce type de méthode heuristique est illustré dans les documents suivants :

- N. Lindenkamp, C.-P. Stöber-Schmidt & P. Eilts, "Strategies for Reducing NOx and Particulate Matter Emissions in Diesel Hybrid Electric Vehicles", SAE Paper n°2009-01-1305, 2009.
- O. Predelli, F. Bunar, J. Manns, R. Buchwald and A. Sommer, "Laying Out Diesel-Engine Control Systems in passenger-Car Hybrid Drives". Proceedings of the IAV conference on Hybrid Vehicle and Energy Management, pp. 131-151, February 14-15, 2007.

Cependant, ce type de stratégie empirique ne permet pas de trouver la trajectoire optimale et le réglage de la pente du gradient dépend du moteur, de sa calibration et du type de conduite. En effet, les limites de ces gradients doivent être calibrées pour chaque cycle.

L'invention permet de diminuer les émissions polluantes transitoires d'un moteur thermique d'un système de propulsion hybride en intégrant les phénomènes physiques impliqués dans leur production.

L'objet de l'invention concerne un procédé de commande d'un système de propulsion hybride d'un véhicule, dans lequel on définit la trajectoire de couple qui minimise les émissions du moteur thermique. Durant les phases de fonctionnement transitoires, il modifie la répartition entre la consigne de couple de la machine électrique et la consigne de couple du moteur thermique. Le principe consiste à limiter la dynamique de la consigne de couple du moteur thermique. La machine électrique assure la compensation du couple afin de satisfaire la demande à la roue. Pour cela, selon l'invention, on modélise les émissions de NOx du moteur Diesel du système de propulsion hybride et on utilise ce modèle pour définir les consignes de couple des composants du système de propulsion hybride.

L'avantage de ce procédé réside dans la prise en compte, dans le calcul de la trajectoire de couple, des phénomènes physiques qui pilotent la production des émissions. L'utilisation de modèles des phénomènes physiques mis en jeu assure la réalisation du procédé et simplifie son réglage, car le procédé nécessite le calibrage d'un unique paramètre de réglage. De plus, le procédé de commande permet de réduire la part transitoire des émissions de NOx, tout en conservant les gains en consommation de carburant liés à l'hybridation. En outre, le procédé selon l'invention est complémentaire des stratégies conventionnelles (statiques) et assure un découplage des objectifs statique et transitoire dans la gestion d'un véhicule hybride.

Le procédé selon l'Invention

L'invention concerne un procédé de commande d'un système de propulsion hybride, constitué d'au moins une machine électrique et d'au moins un moteur Diesel, dans lequel on acquiert une consigne de couple statique $T_{eng,s}^{sp}$ dudit moteur Diesel, caractérisé en ce qu'on réalise les étapes suivantes :

- on construit un modèle d'émissions d'oxydes d'azote (NOx) permettant d'estimer les émissions dudit moteur Diesel en fonction d'un couple $T_{eng}$ dudit moteur Diesel ;

- on calcule une consigne dynamique $NO_x^{sp}$ d'émissions de NOx à partir dudit modèle d'émission de NOx, et de ladite consigne de couple statique $T_{eng,s}^{sp}$ dudit moteur Diesel ;

- on déduit une consigne de couple dynamique dudit moteur Diesel $T_{eng}^{sp}$ à partir de la consigne $NO_x^{sp}$ d'émissions de NOx;

- on détermine une consigne de couple dynamique de ladite machine électrique $T_{mot}^{sp}$ en fonction de ladite consigne de couple dynamique du moteur Diesel $T_{eng}^{sp}$ ; et

- on applique les consignes de couple dynamiques audit système de propulsion.

Dans un mode de réalisation, ledit modèle d'émissions d'oxydes d'azote est fonction du régime du moteur Diesel et de la température maximale dans le cylindre du moteur.

Avantageusement, ledit moteur Diesel est équipé d'un système de recirculation des gaz d'échappement amenant des gaz brûlés dans un collecteur d'admission, en amont d'un cylindre dudit moteur Diesel, ledit modèle d'émissions de $NO_x$ étant fonction de la fraction de gaz brûlés $F_1^{est}$ dans le collecteur d'admission dudit moteur Diesel.

De préférence, les émissions de $NO_x$ sont modélisées par la formule :

$$NO_x = \alpha_1 \left( \frac{N_e}{\alpha_2} \right)^{\alpha_3} \left( \alpha_4 \left( \hat{T}_{cyl} - \alpha_5 \right) \right)^{\alpha_6 (1 - \alpha_7 F_1)}$$

avec

$\alpha_1$ à $\alpha_1$     : coefficients de calage du modèle de $NO_x$,

$N_e$     : régime du moteur Diesel,

$\hat{T}_{cyl}$     : température maximale dans le cylindre du moteur,

$F_1$     : - fraction de gaz brûlés dans le collecteur d'admission si le moteur Diesel est équipé d'un circuit de recirculation des gaz d'échappement, - cette valeur étant nulle sinon, et

$NO_x$     : niveau d'émissions de $NO_x$.

Dans un mode de réalisation, on définit un seuil d'émissions de $NO_x$ pour le moteur Diesel, la consigne $NO_x^{sp}$ d'émissions de $NO_x$ étant calculée en fonction dudit seuil.

Alternativement, on peut fixer un facteur de réduction $\xi$ des émissions de $NO_x$, la consigne $NO_x^{sp}$ d'émissions de $NO_x$ étant calculée en fonction dudit facteur de réduction $\xi$.

De plus, la déduction de la consigne de couple dynamique du moteur Diesel peut être obtenue par inversion du modèle d'émission de $NO_x$.

De préférence, la consigne de couple statique $T_{eng,s}^{sp}$ dudit moteur Diesel est obtenue à partir d'une consigne de couple du système de propulsion $T_{pwt}^{sp}$ par un superviseur énergétique, notamment un superviseur énergétique quasi-statique, équipant le système de propulsion hybride.

L'invention concerne également un produit programme d'ordinateur téléchargeable depuis un réseau de communication et/ou enregistré sur un support lisible par ordinateur et/ou exécutable par un contrôleur. Ce produit programme

**EP 2 594 443 B1**

d'ordinateur comprend des instructions de code de programme pour la mise en oeuvre du procédé selon l'invention, lorsque ledit programme est exécuté sur un contrôleur.

L'invention concerne en outre un système de propulsion hybride d'un véhicule constitué d'au moins une machine électrique et d'au moins un moteur Diesel. Le système de propulsion est commandé par le procédé de commande tel que défini précédemment. La commande du système de propulsion en régime transitoire peut être en cascade d'un superviseur énergétique quasi-statique.

L'invention concerne également un véhicule, notamment automobile, caractérisé en ce qu'il comprend un système de propulsion hybride selon l'invention.

## Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.

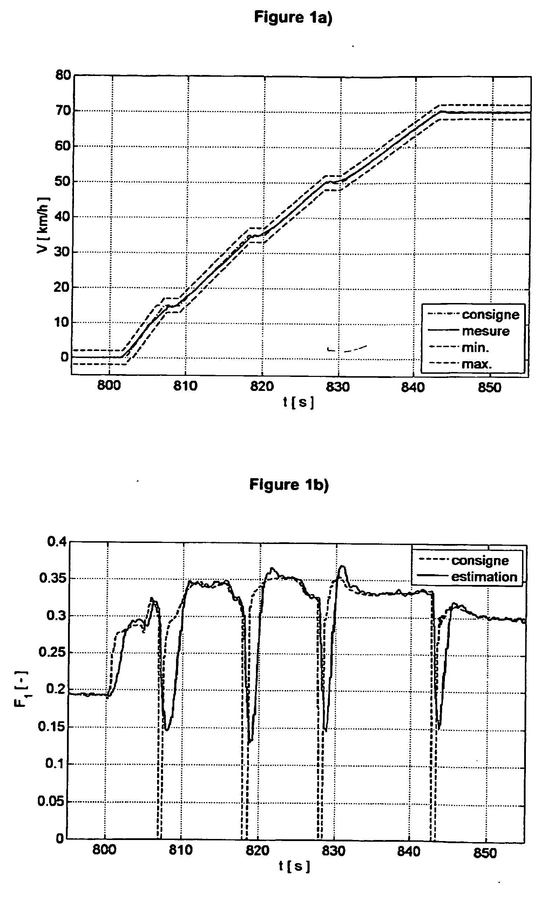

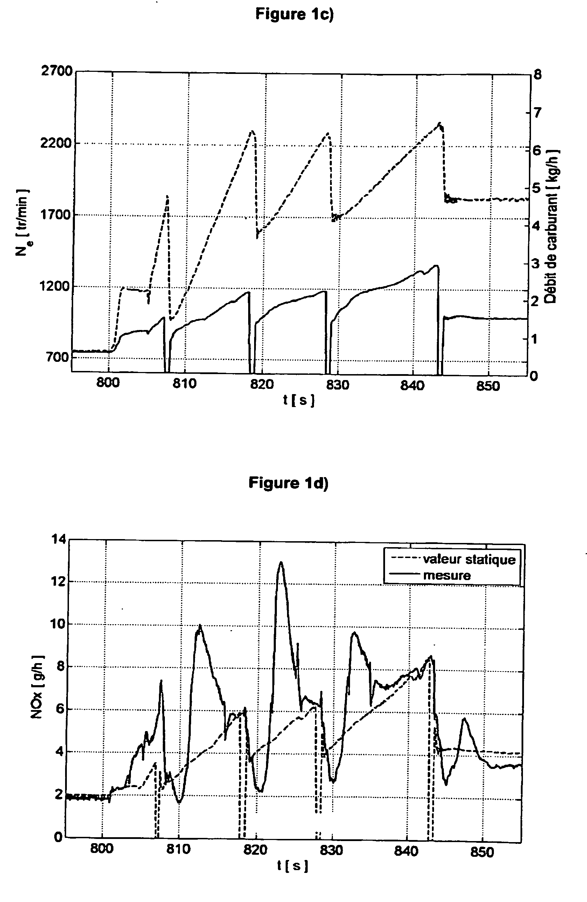

Les figures 1a) à 1d) illustrent une comparaison entre les émissions de NOx mesurées et les émissions de NOx quasi-statiques pour la première accélération de la partie extra urbaine du cycle de conduite NEDC, en termes de vitesse véhicule (1a)), de fraction des gaz brûlés dans le collecteur d'admission (1b)), du régime moteur(1c)) et des émissions de NOx (1d)).

Les figures 2a) et 2b) illustrent l'influence du gradient de couple moteur (dT) sur les émissions de NOx en régime transitoire.

La figure 3 illustre la consigne dynamique de couple du moteur thermique et des émissions d'oxydes d'azote.

La figure 4 est un schéma de principe de mise en oeuvre de la stratégie dynamique.

Les figures 5a) et 5b) sont des schémas de principe du calcul d'une trajectoire de consigne de couple du moteur thermique. La figure 5a) représentant le modèle d'émission de NOx, la figure 5b) un mode de réalisation spécifique.

La figure 6 illustre le principe du calcul de la consigne de NOx.

La figure 7 illustre la cartographie de température du cylindre maximale.

Les figure 8a) à 8f) représentent des résultats de simulations du procédé de commande d'un système de propulsion hybride selon l'invention, en termes de couple du moteur thermique (8a)), de couple du moteur électrique (8b)), de fraction de gaz brûlés (8c)), de température du cylindre (8d)), d'émissions de NOx (8e)) et 8f)).

La figure 9 montre l'évolution de la consommation de carburant en fonction des émissions de NOx pour différentes valeurs du facteur de réduction.

La figure 10 illustre la part des émissions transitoires de NOx sur cycle FTP en fonction du facteur de réduction.

## Description détaillée du procédé

Le procédé selon l'invention permet de réduire les émissions de NOx pour un système de propulsion hybride. Il permet de gérer les phases transitoires, entre deux points statiques de fonctionnement, en se basant sur un modèle d'émissions de NOx, capable de prédire les émissions de NOx. Ce modèle permet de déterminer les émissions de $NO_x$ du système de propulsion hybride en fonction du couple du moteur à combustion interne.

Selon l'invention, le procédé permet la commande d'un système de propulsion hybride d'un véhicule, notamment automobile, constitué d'au moins une machine électrique et d'au moins un moteur Diesel. Pour les régimes transitoires, les étapes suivantes sont réalisées :

- acquisition d'une consigne de couple statique du moteur thermique $T_{eng,s}^{sp}$ ;

- construction d'un modèle d'émissions de NOx, permettant d'estimer les émissions de NOx dudit moteur Diesel en fonction dudit couple $T_{eng}$ dudit moteur Diesel ;

- calcul d'une consigne $NO_x^{sp}$ dynamique d'émissions de NOx à partir dudit modèle d'émissions NOx, déterminant les émissions de NOx dudit moteur Diesel en fonction de ladite consigne de couple $T_{eng,s}^{sp}$ ;

- déduction d'une consigne de couple dynamique du moteur Diesel $T_{eng}^{sp}$ ;

- détermination d'une consigne de couple dynamique de la machine électrique $T_{mot}^{sp}$ ; et

- application des consignes de couple dynamiques au système de propulsion.

**Nomenclature**

Dans la suite de la description, nous utiliserons les notations suivantes :

$\xi$ : Facteur de réduction du pic de NOx [en %],

$\beta$ : Seuil d'initialisation de la consigne de NOx [en ppm],

$\alpha_i$ : Paramètres de calage du modèle d'émissions de NOx [sans unité],

$F_1^{sp}$ : Consigne de la fraction massique de gaz brûlé dans le collecteur d'admission [en %].

$F_1^{est}$ : Estimation de la fraction massique de gaz brûlé dans le collecteur d'admission [en %],

$N_e$ : Régime du moteur thermique [en tr/min],

$T_{pwt}^{sp}$ : consigne de couple statique du système de propulsion [en Nm],

$T_{eng,s}^{sp}$ : consigne de couple statique du moteur thermique à atteindre en fonction de la consigne de couple du système de propulsion [en Nm],

$T_{mot,s}^{sp}$ : consigne de couple statique de la machine électrique à atteindre en fonction de la consigne de couple du système de propulsion [en Nm],

$T_{eng}^{sp}$ : consigne de couple du moteur thermique dynamique [en Nm],

$T_{mot}^{sp}$ : consigne de couple de la machine électrique dynamique [en Nm],

$\hat{T}_{cyl}^{sp}$ : température du cylindre maximale pour la consigne de couple statique [en K],

$\hat{T}_{cyl}^{dyn}$ : température du cylindre maximale minimisant les émissions de NOx [en K],

$\Delta NO_x$ : amplitude du pic de NOx par rapport au point stabilisé cible [en ppm],

$\varepsilon NO_x$ : erreur d'émissions de NOx [en ppm],

$\overline{NO}_x$ : valeur maximale du pic d'émissions de NOx [en ppm],

$NO_x^s$ : valeur des émissions de NOx sur un point stabilisé [en ppm],

$NO_x(t)$ : emissions de NOx générées par le transitoire de couple nominal [en ppm],

$NO_x^{sp}$ : consigne d'émissions de NOx [en ppm].

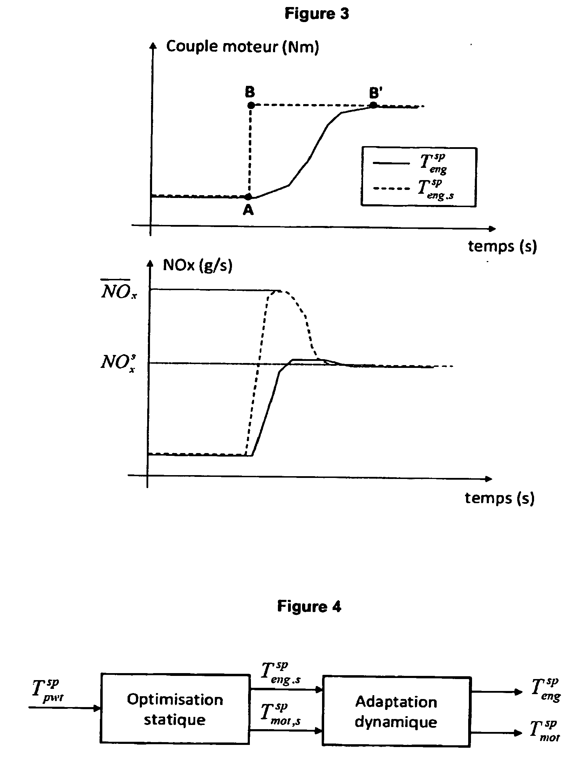

Le principe de ce procédé consiste à calculer, lors des phases de fonctionnement transitoire, une trajectoire de couple du moteur thermique qui minimise les émissions de NOx. Le principe d'une telle méthode est représenté sur la figure 3. Il s'agit, lorsque la consigne de couple varie entre un point A et un point B de déterminer si celle-ci entraine un surplus transitoire d'émissions de NOx. Les courbes en trait plein représentent la variation du couple du moteur thermique et la variation des émissions de NOx obtenues par le procédé selon l'invention, les courbes en pointillées sont celles représentant une variation instantanée du couple du moteur thermique.

Dans un mode de réalisation préféré, le système de propulsion est équipé d'un circuit de recirculation des gaz d'échappement (EGR). Dans ce cas, une forte variation du couple moteur conduit généralement à des écarts importants au niveau de la boucle d'air (admission de l'air et recirculation des gaz d'échappement). Les conditions thermodynamiques dans la chambre de combustion s'écartent alors des conditions stabilisées et les émissions de NOx augmentent. Il est alors souhaitable de calculer une nouvelle trajectoire du couple du moteur thermique. Le procédé de détermination de cette nouvelle consigne de couple utilise un modèle d'émissions de NOx, qui permet de déterminer la trajectoire assurant des émissions minimales entre deux points de couple statiques (A et B). La transition du point A vers le point B n'est plus instantanée mais suit une trajectoire qui conduit au point B'. Pendant cette phase, le couple du moteur thermique est compensé à l'aide de la machine électrique afin que la demande de couple à la roue soit satisfaite. Le procédé consiste donc en une compensation de couple du moteur thermique afin de limiter les sollicitations conduisant à des écarts d'émissions de NOx.

**Présentation d'un mode de réalisation**

Le mode de réalisation décrit dans les paragraphes ci dessous concerne un moteur Diesel équipé d'un circuit de recirculation des gaz brûlés. En outre, dans ce mode de réalisation, un superviseur énergétique, de type statique ou quasi-statique, permet de déterminer les consignes de couples du système de propulsion hybride en régime stabilisé.

Etape 1) Acquisition d'une consigne de couple

L'invention a pour objectif de réduire la part transitoire des émissions de NOx. On appelle régime transitoire, le passage d'une consigne de couple statique à une deuxième consigne de couple statique.

Tel qu'illustré à la figure 4, à partir de la consigne de couple du système de propulsion $T_{pwt}^{sp}$, on détermine les consignes de couple statiques à appliquer au moteur thermique $T_{eng,s}^{sp}$ et à la machine électrique $T_{mot,s}^{sp}$. Ces consignes de couple statiques sont déterminées par un superviseur énergétique, en cascade duquel le procédé de commande selon l'invention est implémenté. Ce superviseur énergétique, notamment de type quasi-statique, a pour fonction de choisir les points de fonctionnement et donc les consignes des couples du moteur thermique et de la machine électrique. L'invention est complémentaire d'un superviseur énergétique quasi-statique de type ECMS. Cependant, elle est totalement indépendante de celui-ci et pourrait fonctionner en aval de n'importe quel superviseur énergétique. La consigne de couple du système de propulsion $T_{pwt}^{sp}$ correspond à la demande de couple à roue, notamment souhaité par le conducteur du véhicule.

Etape 2) Construction du modèle d'émissions de NOx

La consigne dynamique d'émission de NOx est calculée à partir d'un modèle d'émissions de NOx, déterminant les émissions de NOx du moteur Diesel. On appelle modèle d'émission de NOx un modèle capable de prédire les émissions de NOx du moteur Diesel, en fonction du couple du moteur Diesel du système de propulsion hybride. Pour être précis et représentatif du moteur, ce modèle doit être calé sur le moteur Diesel du système de propulsion utilisé, et doit dépendre des conditions de fonctionnement de celui-ci, par exemple le régime du moteur thermique $N_e$. En outre, l'adjectif dynamique précise qu'il s'agit de consigne qui s'applique en régime transitoire, c'est-à-dire entre deux points de fonctionnement stabilisés, cette consigne évoluant en fonction du temps.

Ce modèle doit être inversible, afin de pouvoir déterminer par la suite la consigne de couple dynamique à partir de la consigne dynamique d'émissions de NOx. Un modèle semi-empirique d'émission de NOx peut être utilisé.

Dans ce mode de réalisation, le calcul de la trajectoire de couple s'effectue en cascade du calcul statique comme présenté sur la figure 4. La consigne de couple statique déterminée par la stratégie d'optimisation statique, $T_{eng,s}^{sp}$, est corrigée et la consigne de couple dynamique est notée $T_{eng}^{sp}$. Les relations liant le couple du moteur thermique, de la machine électrique et la consigne de couple du système de propulsion hybride restent inchangées :

$$T_{pwt}^{sp} = T_{eng}^{sp} + T_{mot}^{sp} \quad (1)$$

$$T_{pwt,s}^{sp} = T_{eng,s}^{sp} + T_{mot,s}^{sp} \quad (2)$$

Les émissions de NOx sont calculées à l'aide du modèle semi empirique suivant :

$$NO_x = \phi\left(N_e, \hat{T}_{cyl}, F_1\right) \quad (3)$$

Il s'agit d'une corrélation qui relie les émissions avec le régime moteur $N_e$, la fraction de gaz brûlé à l'admission $F_1$ et la température maximale dans le cylindre $\hat{T}_{cyl}$. Ces grandeurs ont été choisies car elles participent à la production des NOx dans la chambre de combustion d'un moteur Diesel. Ce modèle est détaillé dans le document :

J.-C. Schmitt, M. Fremovici, O. Grondin & F. Le Berr, "Compression Ignition Engine Model Supporting Powertrain Development, Proceedings of the IFAC workshop on engine and powertrain control, simulation and modeling", Rueil-Malmaison, France, 30 Novembre - 2 Décembre, 2009.

La fonction Ø est donnée par :

$$NO_x = \alpha_1 \left( \frac{Ne}{\alpha_2} \right)^{\alpha_3} \left( \alpha_4 \left( \hat{T} - \alpha_5 \right) \right)^{\alpha_6(1-\alpha_7 F)} \quad (4)$$

Les coefficients $\alpha_i$ sont des paramètres de calage du modèle de NOx semi physique. Les valeurs de ces coefficients sont calculées à partir de données expérimentales, par exemple par essais sur des bancs d'essai de moteur et elles sont valables pour un moteur. En général, les données issues de la calibration du moteur thermique sont suffisantes pour le calage de ce type de modèle.

Etape 3) Calcul de la consigne d'émissions de NOx

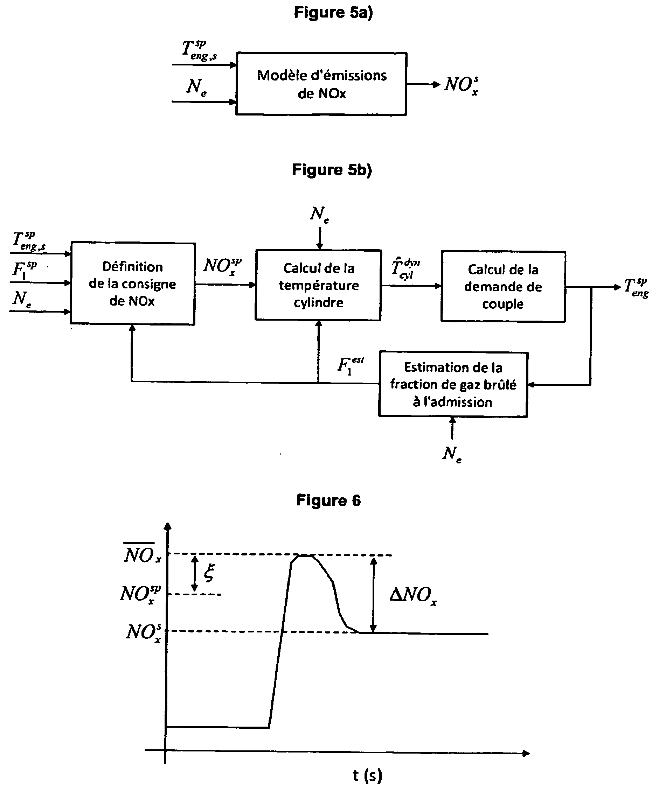

La figure 5a) présente le principe du calcul de la consigne dynamique d'émissions de NOx du moteur thermique, $NO_x^{sp}$, en transitoire dans un cadre général. Le procédé utilise un modèle d'émissions de NOx, déterminant les émissions de NOx du moteur Diesel.

La figure 5b) présente le principe de ce calcul dans le cas particulier du mode de réalisation décrit. Le modèle du système de propulsion se base sur un modèle représentatif des émissions de NOx et un modèle représentatif de la dynamique de la boucle d'air du moteur. On appelle boucle d'air (10) l'ensemble du circuit d'admission et du circuit de recirculation du gaz d'échappement. Le niveau de complexité de ces deux modèles est en adéquation avec une intégration dans une stratégie d'optimisation énergétique pouvant être implémenté en temps réel sur un calculateur électronique. Il s'agit d'un modèle semi empirique (ou « boite-grise ») pour les émissions de NOx et d'un filtre du premier ordre incluant un retard pur représentatif de la dynamique de la fraction de gaz brûlés à l'admission du moteur.

Ces modèles d'émissions de NOx et de la dynamique des gaz brulés sont dépendants du régime du moteur $N_e$ et de la consigne de la fraction de gaz brûlés dans le collecteur d'admission $F_1^{sp}$, en amont d'un cylindre du moteur Diesel, qui peut être donnée par une cartographie dépendante du régime du moteur $N_e$ et de la consigne de couple $T_{eng,s}^{sp}$.

Cette figure 5b) représente les deux étapes principales pour le calcul de la trajectoire de couple : la détermination des émissions de NOx émises lors du fonctionnement transitoire et le calcul d'une nouvelle trajectoire de la consigne de couple moteur à partir d'une consigne d'émissions réduite par rapport au cas nominal. Dans un premier temps, le modèle de NOx est alimenté avec la consigne de couple $T_{eng,s}^{sp}$ issue de l'optimisation statique. Le modèle, en fonction de la consigne actuelle et de celle du pas de calcul précédent, détermine l'amplitude du pic de NOx qui serait généré si elle n'était pas corrigée. Cette valeur, sert de base au calcul de la consigne de NOx pour le calcul de la nouvelle trajectoire de couple. En synthèse, le modèle de NOx et le modèle de dynamique boucle d'air permettent d'assurer un filtrage de la consigne de couple qui respecte la dynamique propre du système afin de limiter le pic d'émissions.

Pour ce modèle, on définit un taux d'atténuation d'émissions de NOx, à l'aide d'un paramètre de réglage $\xi$, qui correspond au pourcentage d'atténuation de l'amplitude du pic de NOx initial. Ainsi, il est possible de moduler la réduction des NOx de la valeur du paramètre $\xi$. Par exemple, sur la figure 6, le transitoire entre deux points de fonctionnement peut conduire à un dépassement du niveau d'émission stabilisé noté $NO_x^s$. L'amplitude de ce dépassement est notée $\overline{NO}_x$. Il est donc possible d'adapter la commande en fonction des conditions extérieures en réglant le paramètre $\xi$. Par exemple, dans le cas d'une zone urbaine où la circulation serait réservée aux véhicules à faible niveau d'émissions polluantes, on pourra adapter le paramètre pour atteindre l'objectif.

Si le dépassement est important, un paramètre de réglage, $\xi$, permet de définir un seuil de dépassement acceptable qui servira de consigne :

$$NO_x^{sp} = NO_x^s + \Delta NO_x \left( 1 - \frac{\xi}{100} \right) \quad (5)$$

où $\Delta NO_x$ est l'écart entre le niveau d'émissions en stabilisé et la valeur maximale du pic en transitoire :

$$\Delta NO_x = \overline{NO_x} - NO_x^s \quad (6)$$

où $NO_x^s$ est le niveau d'émission de NOx en régime stabilisé. Le paramètre $\xi$ permet de régler l'intensité de la correction en régime transitoire. Si $\xi$ vaut zéro alors la stratégie de limitation des NOx est inactive. Sinon, une valeur de dépassement acceptable est définie.

Le modèle d'émissions de NOx par exemple celui de l'équation (4) est utilisé pour calculer :

i. la valeur statique du point de fonctionnement stabilisé $NO_x^s$,

ii. la valeur instantanée des émissions générées par le transitoire de couple nominal $NO_x(t)$, ce qui permet de déterminer la consigne $NO_x^{sp}$ dynamique d'émission de NOx, et

iii. la valeur instantanée des émissions générées par le transitoire de couple issu de la stratégie de limitation $NO_x^{dyn}(t)$. Cette valeur n'est pas utile pour le déroulement du procédé, mais permet de connaître la valeur des émissions de NOx produites pendant le régime transitoire.

i. Calcul de la valeur statique du point de fonctionnement stabilisé $NO_x^s$.

La valeur statique des NOx sur le point de fonctionnement stabilisé $NO_x^s$ est donnée par:

$$NO_x^s = \phi(N_e, \hat{T}_{cyl}^{sp}, F_1^{sp}) \quad (7)$$

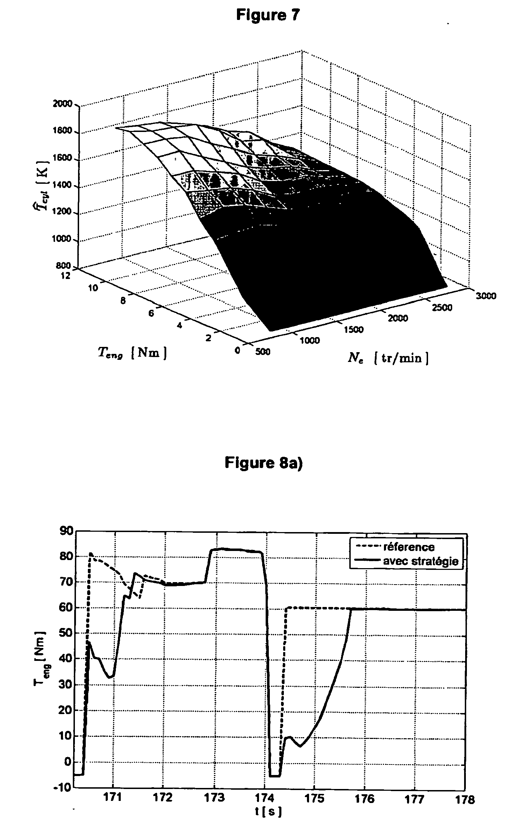

où $\hat{T}_{cyl}^{sp}$ est la température maximale dans le cylindre calculée à partir d'une cartographie (figure 7) qui dépend du régime moteur $N_e$ et de la valeur du couple sur le point de fonctionnement stabilisé :

$$\hat{T}_{cyl}^{sp} = \psi\left(N_e, T_{eng,s}^{sp}\right) \quad (8)$$

et $F_1^{sp}$ est la consigne de fraction de gaz brûlés dans le collecteur d'admission sur le point de fonctionnement stabilisé. Elle est donnée par une cartographie dépendante du régime moteur et de la consigne de couple :

$$F_1^{sp} = f\left(N_e, T_{eng,s}^{sp}\right) \quad (9)$$

En combinant les équations (7) à (9), on obtient la valeur $NO_x^s$ des émissions de NOx sur le point de fonctionnement stabilisé en fonction de la consigne de couple statique du moteur Diesel $T_{eng,s}^{sp}$ et du régime du moteur Diesel $N_e$.

ii. Calcul de la valeur instantanée des émissions générées par le transitoire de couple nominal $NO_x(t)$

La valeur instantanée des émissions générées par le transitoire de couple nominal $NO_x(t)$ est donnée par :

$$NO_x(t) = \phi(N_e, \hat{T}_{cyl}^{sp}, F_1^{est}(t)) \quad (10)$$

où $\hat{T}_{cyl}^{sp}$ est la température maximale dans le cylindre (même valeur que pour le calcul de $NO_x^s$, équation (8)) et $F_1^{est}(t)$ est la fraction estimée de gaz brûlés dans le collecteur d'admission. Elle intègre la dynamique des gaz brûlés à l'admission. Le modèle de dynamique de transport des gaz utilisé est un filtre du premier ordre associé à un retard pur tel que :

$$\tau(t)\frac{dF_1^{est(t)}}{dt} + F_1^{est}(t) = F_1^{sp}(t - t_r(t)) \qquad (11)$$

où la constante de temps du filtre $\tau$ et le retard pur $t_r$ sont paramétrés en fonction du régime moteur :

$$t_r(t) = \begin{cases} \dfrac{k_r}{N_e(t)} & \text{si} \quad T_{eng}(t) \succ 0 \\ 0 & \text{sinon} \end{cases} \qquad (12)$$

et

$$\tau(t) = \frac{k_\tau}{N_e(t)} \qquad (13)$$

Les coefficients $k_r$ et $k_\tau$ permettent de régler la dynamique des gaz brûlé et ils constituent deux paramètres de réglage de la stratégie de limitation des émissions transitoires. Ils peuvent être déterminés expérimentalement, par exemple lors d'essais sur des bancs moteur. La valeur instantanée des émissions générées par le transitoire de couple nominal $NO_x(t)$ intervient dans le calcul de l'amplitude du pic de NOx par rapport au point stabilisé $\Delta NO_x$ décrite par l'équation (4). La valeur de $\overline{NO}_x$ est calculée à partir de l'amplitude maximale du pic d'émission transitoire et elle est figée tant que l'erreur $\varepsilon NO_x$ est supérieure à un seuil fixé $\beta$. $\varepsilon NO_x$ représente l'erreur entre les émissions générées par le transitoire de couple nominal $NO_x(t)$ et la valeur du point stabilisé $NO_x^s$. Une fois que le système est en régime stabilisé, il est nécessaire de réinitialiser $\overline{NO}_x$ à la valeur statique $NO_x^s$. Cette condition garantit l'indépendance de deux transitoires consécutifs. Finalement, la valeur maximale du pic de NOx s'écrit :

$$\overline{NO}_x = \begin{cases} \max\{NO_x(t)\} & \text{si} \quad \varepsilon NO_x \succ \beta \\ NO_x^s & \text{sinon} \end{cases} \qquad (14)$$

$$\text{avec} \quad \varepsilon NO_x = NO_x(t) - NO_x^s \qquad (15)$$

En intégrant dans l'équation (6) cette valeur de $\overline{NO}_x$ ainsi que la valeur $NO_x^s$ des émissions de NOx sur le point de fonctionnement stabilisé déterminée à l'étape précédente, on calcule $\Delta NO_x$, puis on détermine la consigne $NO_x^{sp}$ dynamique d'émissions de NOx en appliquant l'équation (5).

iii. Calcul de la valeur instantanée des émissions générées par le transitoire de couple issu de la stratégie de limitation $NO_x^{dyn}(t)$

La valeur instantanée des émissions générées par le transitoire de couple issu de la stratégie de limitation $NO_x^{dyn}(t)$ est donnée par :

$$NO_x^{dyn}(t) = \phi(N_e, \hat{T}_{cyl}^{dyn}, F_1^{est}(t)) \qquad (16)$$

Cette grandeur n'est pas utilisée dans le procédé. Cependant, elle informe sur la valeur des émissions produites lors du transitoire. Elle est en principe toujours inférieure à la valeur estimée des émissions générées par le transitoire de couple nominal. Dans l'équation (16), $F_1^{est}$ est la composition admission estimée (même valeur que pour le calcul de $NO_x(t)$, équation (11)) et $\hat{T}_{cyl}^{dyn}$ est la température maximale dans le cylindre calculé à partir de la consigne de couple corrigée $T_{eng}^{sp}$ :

$$\hat{T}_{cyl}^{dyn} = \psi\left(N_e, T_{eng}^{sp}\right) \quad (17)$$

Etape 4) Déduction de la consigne de couple dynamique du moteur Diesel

Une fois la consigne calculée, $NO_x^{sp}$, le modèle d'émissions de NOx est inversé pour permettre le calcul d'une nouvelle consigne dynamique de couple $T_{eng}^{sp}$. Au sein de la stratégie, le modèle de NOx a deux fonctions. Premièrement, il permet de calculer la réponse du système par rapport à une consigne de couple issue de la stratégie d'optimisation statique et d'en déduire une consigne de NOx. Ensuite, il est inversé et il permet de calculer la trajectoire de couple qui satisfait cette consigne.

Dans le mode de réalisation décrit, on peut inverser les équations précédentes, notamment (6) et (8). La trajectoire de couple corrigée est obtenue en inversant le modèle de température maximale cylindre décrit par l'équation (8) :

$$T_{eng}^{sp} = \psi^{-1}\left(N_e, \hat{T}_{cyl}^{dyn}\right) \quad (18)$$

La température $\hat{T}_{cyl}^{dyn}$ correspond à la trajectoire de température maximale dans la chambre de combustion telle que les émissions respectent la consigne $NO_x^{sp}$. Le calcul de la température $\hat{T}_{cyl}^{dyn}$ s'obtient en inversant le modèle d'émissions donné par l'équation (5) et à partir de la consigne $NO_x^{sp}$ et de l'estimation de la composition des gaz à l'admission :

$$\hat{T}_{cyl}^{dyn} = \phi^{-1}(N_e, NO_x^{sp}, F_1^{est}) \quad (19)$$

La fonction $\phi^{-1}$ s'écrit :

$$\hat{T}_{cyl}^{dyn} = \alpha_5 + \frac{1}{\alpha_4}\left(NO_x^{sp}\frac{1}{\alpha_1}\left(\frac{\alpha_2}{N_e}\right)^{\alpha_3}\right)^{\frac{1}{\alpha_6\left(1-\alpha_7 F_1^{est}\right)}} \quad (20)$$

En combinant les équations (18) et (20), on obtient la consigne de couple dynamique du moteur Diesel $T_{eng}^{sp}$, cette consigne étant fonction du régime moteur $N_e$, de la fraction estimée de gaz brûlés dans le collecteur d'échappement $F_1^{est}$ et de la consigne $NO_x^{sp}$ dynamique d'émissions de NOx.

Etape 5) Détermination de la consigne de couple dynamique de la machine électrique

Le procédé selon l'invention, prévoit de compenser pendant le régime transitoire le couple du moteur thermique à l'aide d'au moins une machine électrique afin que la consigne de couple à la roue soit satisfaite. Il est donc nécessaire de déterminer la consigne de couple dynamique de la machine électrique. Cette consigne de couple peut être obtenue en inversant l'équation (1) :

$$T_{mot}^{sp} = T_{pwt}^{sp} - T_{eng}^{sp} \quad (21)$$

Etape 6) Application des consignes de couples dynamiques

L'invention permet de déterminer les consignes de couple des moyens d'entraînement du système de propulsion hybride. En appliquant ces consignes au moteur thermique et à la machine électrique, on obtient une diminution des émissions polluantes, et on peut limiter également la consommation de carburant.

La segmentation des couches d'optimisation statique et transitoire permet un découplage en deux périodes d'échantillonnage : haute fréquence pour l'optimisation transitoire et basse fréquence pour la partie statique. La période de l'optimisation dynamique est adaptée à des phénomènes physiques mis en jeu au niveau du moteur, en l'occurrence la production des émissions polluantes.

Les paramètres du procédé et leur ordre de grandeurs sont récapitulés dans le Tableau 2.

**Tableau 2 - Liste des paramètres de réglage de la stratégie**

| Symbole | Description | Ordre de grandeur |
|---------|-------------|-------------------|
| $\xi$ | Facteur de réduction du pic de NOx | [0 ; 100] |
| $\alpha_i$ | 7 coefficients de calage du modèle des émissions de NOx | Dépend du moteur considéré |
| $k_r$ | Coefficient de réglage du retard pur | [200 ; 1000] |
| $k_\tau$ | Coefficient de réglage de la constante de temps du filtre du premier ordre | [500 ; 2000] |
| $\beta$ | Seuil d'initialisation de la consigne de NOx | [1 ; 10] |
| $F_1^{sp} = f(N_e, T)$ | Cartographie de consigne de fraction de gaz brûlé à l'admission | Construite à partir des données de calibration du moteur |
| $\hat{T}_{cyl} = \Psi(N_e, T)$ | Cartographie de température cylindre maximale | Construite à partir des données de calibration |

**Variantes de réalisation**

L'invention a été décrite précédemment dans le cadre d'un mode de réalisation préféré, toutefois, l'invention peut concerner également différentes variantes de réalisation, pouvant être combinées.

Etape 1) Acquisition d'une consigne de couple

La consigne de couple statique peut résulter directement d'une commande de l'utilisateur du véhicule et pas d'un superviseur énergétique, de type statique ou quasi-statique, notamment dans un mode de réalisation dans lequel aucun superviseur énergétique n'équipe le système de propulsion hybride.

Etape 2) Construction du modèle d'émissions de NOx

Dans le cas où le moteur thermique n'est pas équipé d'un circuit de recirculation des gaz d'échappement, on peut écrire un modèle inversible d'émissions de NOx dépendant uniquement du régime du moteur et de la température dans le cylindre : $NO_x(t) = \phi(N_e, \hat{T}_{cyl}, 0) = \phi'(N_e, \hat{T}_{cyl})$, cette température dans le cylindre étant fonction de la consigne de couple du moteur thermique $\hat{T}_{cyl}^{dyn} = \psi\left(N_e, T_{eng}^{sp}\right)$ reste valable). De manière analogue au mode de réalisation préféré, ce modèle d'émission de NOx, est un modèle semi-empirique obtenu par corrélation à des essais expérimentaux sur des bancs d'essai de moteurs. Par exemple, on peut réécrire l'équation 4, en supposant nulle la fraction des gaz brûlés dans le collecteur d'admission, ainsi on a :

$$NO_x = \alpha_1 \left( \frac{Ne}{\alpha_2} \right)^{\alpha_3} \left( \alpha_4 \left( \hat{T}_{cyl} - \alpha_5 \right) \right)^{\alpha_6}$$

Etape 3) Calcul de la consigne d'émissions de NOx

Au lieu d'utiliser le paramètre de réglage $\xi$ pour déterminer un taux d'atténuation des émissions de NOx, il peut être envisagé de définir un seuil $S$ d'émissions de NOx à ne pas dépasser, ce seuil $S$ peut être fixe quelque soit le régime statique à atteindre, ou dépendre du point de fonctionnement stabilisé cible. L'équation suivante devra donc être vérifiée : $NO_x^{sp} \leq S$. Cette inéquation intervenant à l'étape ii) à la place de l'équation (3) du mode de réalisation décrit. Ce seuil peut être fixé en fonction de la législation en vigueur concernant les émissions polluantes.

Etape 4) Déduction de la consigne de couple dynamique du moteur Diesel

Lorsqu'aucun circuit de recirculation des gaz d'échappement n'équipe le moteur Diesel, on inverse le modèle d'émissions de $NO_x$ : $NO_x(t) = \phi'(N_e, \hat{T}_{cyl})$, afin de déduire la consigne de couple dynamique du moteur Diesel :

$$\hat{T}_{cyl}^{dyn} = \phi'^{-1}(N_e, NO_x^{sp}) \text{ puis } T_{eng}^{sp} = \psi^{-1}(N_e, \hat{T}_{cyl}^{dyn}).$$

Etape 5) Détermination de la consigne de couple dynamique de la machine électrique

D'autres types de compensations prenant en compte les capacités (plage de fonctionnement) de la machine électrique peuvent être mis en oeuvre par le procédé de commande selon l'invention. Par exemple, si la consigne dynamique de couple de la machine électrique $T_{mot}^{sp}$ dépasse le couple maximum admissible par ladite machine électrique, alors on fixe la consigne de couple de la machine électrique à ce couple maximum, puis on recalcule la consigne dynamique de couple du moteur thermique $T_{eng}^{sp}$ adapté au changement de consigne dynamique de couple de la machine électrique. Ainsi, on utilise au mieux les composants du système de propulsion hybride, avec toutefois une réduction non optimale des émissions polluantes.

**Exemple d'application**

Les résultats présentés dans cette partie sont issus de simulation d'un véhicule hybride Diesel avec une architecture parallèle. Le moteur Diesel est équipé d'un système de recirculation des gaz brûlés. Le modèle du moteur thermique est un modèle physique capable de prédire les émissions polluantes et, en particulier, les émissions de NOx. Un tel modèle est décrit par exemple dans le document :

R. Lebas, G. Mauvio, F. Le Berr & A. Albrecht, "A phenomenological approach to model diesel engine combustion and in-cylinder pollutant emissions adapted to control strategy, Proceedings of the IFAC workshop on engine and powertrain control, simulation and modeling", Rueil-Malmaison, France, 30 Novembre - 2 Décembre, 2009.

Ce modèle a été recalé à partir d'essais réalisés sur un moteur Diesel Euro 6. La stratégie de limitation des émissions en régime transitoire a été couplée avec un superviseur énergétique statique dont le principe repose sur la commande optimale. Celui-ci est présenté dans le document déjà cité :

O. Grondin, L. Thibault, Ph. Moulin, A. Chasse & A. Sciarretta, "Energy Management Strategy for Diesel Hybrid Electric Vehicle", Proceedings of the 7th IEEE Vehicle Power and Propulsion Conference, Chicago, USA, 6-9 September 2011.

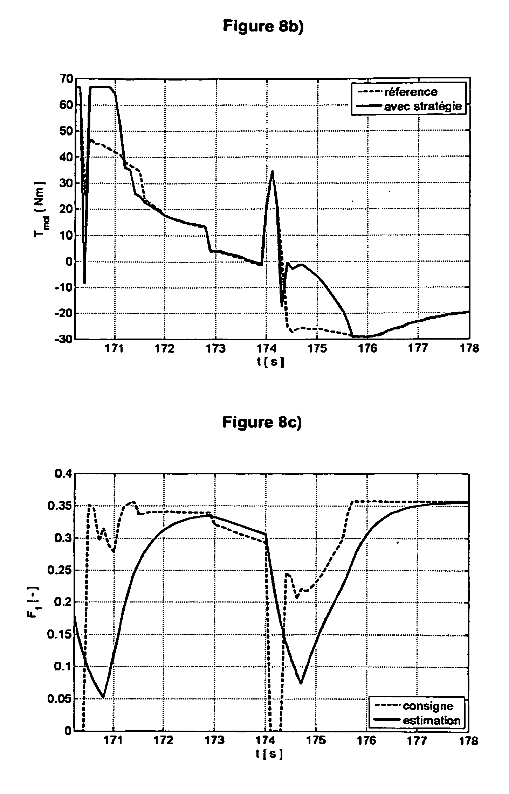

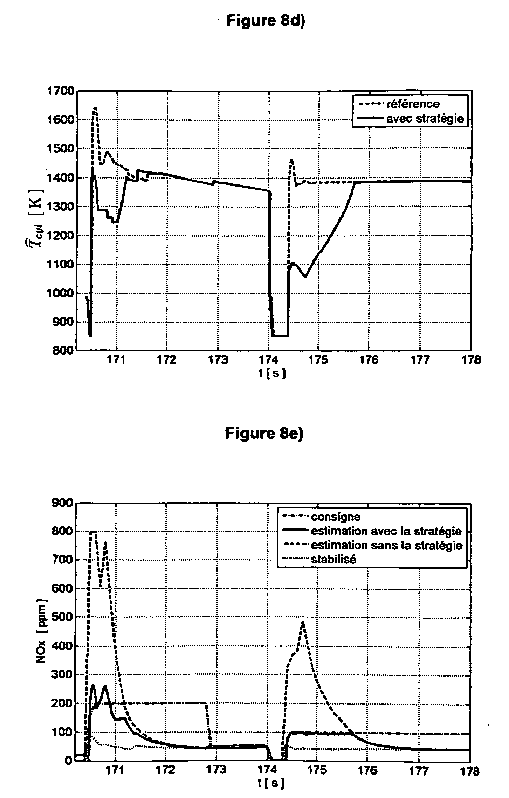

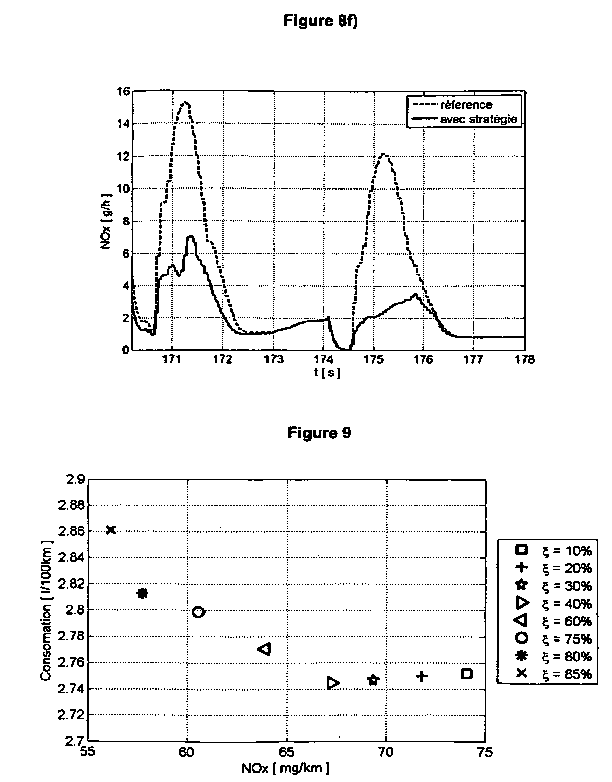

Les figures 8a) à 8f) montrent une portion d'un cycle de conduite FTP, dans laquelle le procédé de commande est actif. D'abord, on remarque que les points de fonctionnement stabilisés ne sont pas modifiés. En revanche, en régime transitoire, le couple du moteur thermique est limité (figure 8a). La limitation opère dans des phases où il existe des écarts important entre la consigne et l'estimation de la fraction de gaz brûlé à l'admission (figure 8c)). Dans ce cas, le modèle interne de NOx anticipe un dépassement important du niveau attendu en régime stabilisé (figure 8e)). La répartition des couples change et la machine électrique permet de limiter la dynamique du moteur thermique (figure 8b)). Les pics d'émissions intervenant lors de ces phases (figure 8f)) sont fortement réduits. On remarque que la réduction des pics d'émission résulte de la limitation de la température dans le cylindre (figure 8d)). En effet, cette grandeur est extrêmement importante dans les mécanismes cinétiques de production des NOx. Ces résultats indiquent que la prise en compte dans un superviseur énergétique de grandeurs physiques qui pilotent la production de NOx conduit à de bons résultats.

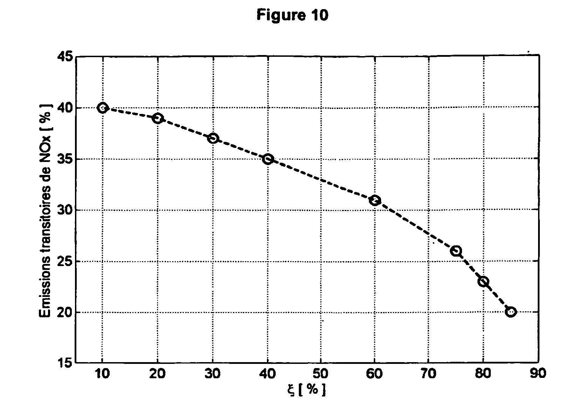

La figure 9 montre la consommation du véhicule hybride et les émissions de NOx obtenus sur un cycle de conduite FTP et pour un balayage des valeurs du paramètre de réglage $\xi$ pour ces simulations. Les résultats indiquent qu'il est possible de trouver des valeurs de ce paramètre qui permettent de diminuer la valeur des émissions de NOx sans modifier la consommation du véhicule. C'est le cas lorsque $\xi$ varie entre 10 et 40 %. Pour des valeurs supérieures les émissions continuent à diminuer mais la consommation peut augmenter sensiblement. Dans ce cas, le paramètre de réglage $\xi$ permet de moduler le compromis entre les émissions de $NO_x$ et la consommation de carburant. Dans tous les cas, la part des émissions transitoires de NOx sur cycle FTP diminue à mesure que le paramètre $\xi$ augmente comme l'indique la figure 10.

En outre, le procédé selon l'invention offre donc les avantages suivants :

- la possibilité de modifier en ligne le niveau d'émissions durant les phases transitoires ;
- l'utilisation des modèles des phénomènes physiques mis en jeux : un modèle semi physique (de type corrélation) pour la prédiction des émissions de NOx et un modèle de dynamique de la boucle d'air limite le nombre de paramètres de réglage ;
- ce procédé est adapté à un véhicule hybride équipé d'un moteur à allumage par compression, cependant il pourrait être adapté au moteur à allumage commandé.

## Revendications

1. Procédé de commande d'un système de propulsion hybride, constitué d'au moins une machine électrique et d'au moins un moteur Diesel, dans lequel on acquiert une consigne de couple statique $\left(T_{eng,s}^{sp}\right)$ dudit moteur Diesel, et on réalise les étapes suivantes :

   - on construit un modèle d'émissions d'oxydes d'azote (NOx) permettant d'estimer les émissions dudit moteur Diesel en fonction d'un couple ($T_{eng}$) dudit moteur Diesel ;
   - on calcule une consigne dynamique $\left(NO_x^{sp}\right)$ d'émissions de NOx à partir dudit modèle d'émission de NOx, et de ladite consigne de couple statique $\left(T_{eng,s}^{sp}\right)$ dudit moteur Diesel ;
   - on déduit une consigne de couple dynamique dudit moteur Diesel $\left(T_{eng}^{sp}\right)$ à partir de la consigne $\left(NO_x^{sp}\right)$ d'émissions de NOx;
   - on détermine une consigne de couple dynamique de ladite machine électrique $\left(T_{mot}^{sp}\right)$ en fonction de ladite consigne de couple dynamique du moteur Diesel $\left(T_{eng}^{sp}\right)$; et
   - on applique les consignes de couple dynamiques audit système de propulsion.

2. Procédé selon la revendication 1, dans lequel ledit modèle d'émissions d'oxydes d'azote est fonction du régime du moteur Diesel et de la température maximale dans le cylindre du moteur.

3. Procédé selon l'une des revendications 1 ou 2, dans lequel ledit moteur Diesel est équipé d'un système de recirculation des gaz d'échappement amenant des gaz brûlés dans un collecteur d'admission, en amont d'un cylindre dudit moteur Diesel, ledit modèle d'émissions de NOx étant fonction de la fraction de gaz brûlés $\left(F_1^{est}\right)$ dans le collecteur d'admission dudit moteur Diesel.

4. Procédé selon l'une des revendications 1 à 3, dans lequel les émissions de NOx sont modélisées par la formule :

$$NO_x = \alpha_1 \left( \frac{N_e}{\alpha_2} \right)^{\alpha_3} \left( \alpha_4 \left( \hat{T}_{cyl} - \alpha_5 \right) \right)^{\alpha_6 (1 - \alpha_7 F_1)}$$

avec

$\alpha_1$ à $\alpha_7$ : coefficients de calage du modèle de $NO_x$,

$N_e$ : régime du moteur Diesel,

$\hat{T}_{cyl}$ : température maximale dans le cylindre du moteur,

$F_1$ : fraction de gaz brûlés dans le collecteur l'admission si le moteur Diesel est équipé d'un circuit de recirculation des gaz d'échappement, cette valeur étant nulle sinon, et

$NO_x$ : niveau d'émissions de NOx.

5. Procédé selon l'une des revendications précédentes, dans lequel on définit un seuil d'émissions de NOx pour le moteur Diesel, la consigne $\left( NO_x^{sp} \right)$ d'émissions de NOx étant calculée en fonction dudit seuil.

6. Procédé selon l'une des revendications 1 à 4, dans lequel on fixe un facteur de réduction ($\xi$) des émissions de NOx, la consigne $\left( NO_x^{sp} \right)$ d'émissions de NOx étant calculée en fonction dudit facteur de réduction ($\xi$).

7. Procédé selon l'une des revendications précédentes, dans lequel la déduction de la consigne de couple dynamique du moteur Diesel est obtenue par inversion du modèle d'émission de NOx.

8. Procédé selon l'une des revendications précédentes, dans lequel ladite consigne de couple statique $\left( T_{eng,s}^{sp} \right)$ dudit moteur Diesel est obtenue à partir d'une consigne de couple du système de propulsion $\left( T_{pwt}^{sp} \right)$ par un superviseur énergétique, notamment un superviseur énergétique quasi-statique, équipant le système de propulsion hybride.

9. Produit programme d'ordinateur téléchargeable depuis un réseau de communication et/ou enregistré sur un support lisible par ordinateur et/ou exécutable par un contrôleur, dans lequel il comprend des instructions de code de programme pour la mise en oeuvre du procédé selon l'une quelconque des revendications précédentes, lorsque ledit programme est exécuté sur un contrôleur.

10. Système de propulsion hybride d'un véhicule constitué d'au moins une machine électrique et d'au moins un moteur Diesel, **caractérisé en ce que** le système de propulsion est commandé par le procédé de commande selon l'une des revendications 1 à 08.

11. Système selon la revendication 10, dans lequel la commande du système de propulsion en régime transitoire est en cascade d'un superviseur énergétique quasi-statique.

12. Véhicule, notamment automobile, **caractérisé en ce qu'**il comprend un système de propulsion hybride selon l'une des revendications 10 ou 11.

**Patentansprüche**

1. Verfahren zur Steuerung eines Hybridantriebssystems, das aus mindestens einer elektrischen Maschine und mindestens einem Dieselmotor besteht, wobei ein Sollwert des statischen Moments ($T_{eng,s}^{sp}$) des Dieselmotors erfasst wird, und die folgenden Schritte durchgeführt werden:

- Konstruieren eines Modells der Stickoxidemissionen (NOx), das es ermöglicht, die Emissionen des Dieselmotors in Abhängigkeit von einem Moment ($T_{eng}$) des Dieselmotors zu schätzen;
- Berechnen eines dynamischen Sollwerts ($NO_x^{sp}$) der NOx-Emissionen ausgehend von dem Modell der NOx-Emissionen, und dem Sollwert des statischen Moments ( $T_{eng,s}^{sp}$ ) des Dieselmotors;

- Ableiten eines Sollwerts des dynamischen Moments des Dieselmotors ( $T_{eng}^{sp}$ ) ausgehend von dem Sollwert

( $NO_x^{sp}$ ) der NOx-Emissionen;

- Bestimmen eines Sollwerts des dynamischen Moments der elektrischen Maschine ( $T_{mot}^{sp}$ ) in Abhängigkeit

von dem Sollwert des dynamischen Moments des Dieselmotors ( $T_{eng}^{sp}$ ) ; und

- Anwenden der Sollwerte der dynamischen Momente auf das Antriebssystem.

2. Verfahren nach Anspruch 1, wobei das Modell der Stickoxidemissionen von der Drehzahl des Dieselmotors und von der Maximaltemperatur im Zylinder des Motors abhängig ist.

3. Verfahren nach einem der Ansprüche 1 oder 2, wobei der Dieselmotor mit einem System zur Abgasrückführung ausgestattet ist, das Verbrennungsgase in einen Ansaugkrümmer stromaufwärts eines Zylinders des Dieselmotors leitet, wobei das Modell der NOx-Emissionen vom Anteil der Abgase ( $F_1^{est}$ ) in dem Ansaugkrümmer des Dieselmotors abhängig ist.

4. Verfahren nach einem der Ansprüche 1 bis 3, wobei das Modell der NOx-Emissionen mit der folgenden Formel erstellt wird:

$$NO_x = \alpha_1 \left( \frac{N_e}{\alpha_2} \right)^{\alpha 3} \left( \alpha_4 \left( \hat{T}_{cyl} - \alpha_5 \right) \right)^{a_6 \left( 1 - \alpha_7 F_1 \right)}$$

worin:

$\alpha_1$ bis $\alpha_7$: Einstellungskoeffizienten des NOx-Modells sind;
$N_e$: Drehzahl des Dieselmotors,
$\hat{T}_{cyl}$: Maximaltemperatur in dem Zylinder des Motors,
$F_1$: Anteil an Verbrennungsgasen im Ansaugkrümmer, falls der Dieselmotor mit einer Abgasrückführung ausgestattet ist, wobei dieser Wert sonst null ist, und
$NO_x$: Menge der NOx-Emissionen.

5. Verfahren nach einem der vorhergehenden Ansprüche, wobei ein Schwellenwert der NOx-Emissionen für den Dieselmotor definiert wird, wobei der Sollwert ( $NO_x^{sp}$ ) der NOx-Emissionen in Abhängigkeit von diesem Schwellenwert berechnet wird.

6. Verfahren nach einem der Ansprüche 1 bis 4, wobei ein Reduktionsfaktor ($\xi$) der NOx-Emissionen festgelegt wird, wobei der Sollwert ( $NO_x^{sp}$ ) der NOx-Emissionen in Abhängigkeit von diesem Reduktionsfaktor ($\xi$) berechnet wird.

7. Verfahren nach einem der vorhergehenden Ansprüche, wobei die Ableitung des Sollwerts des dynamischen Moments des Dieselmotors durch Umkehrung des Modells der NOx-Emission erhalten wird.

8. Verfahren nach einem der vorhergehenden Ansprüche, wobei der Sollwert des statischen Moments ( $T_{eng,s}^{sp}$ ) des Dieselmotors ausgehend von einem Sollwert des Moments des Antriebssystems ( $T_{pwt}^{sp}$ ) von einem Energieüberwacher, insbesondere einem quasistatischen Energieüberwacher, berechnet wird, mit dem das Hybridantriebssystem ausgestattet ist.

9. Computerprogrammprodukt, das von einem Kommunikationsnetz heruntergeladen werden kann und/oder auf einem computerlesbaren Träger aufgezeichnet und/oder von einem Controller ausgeführt werden kann, wobei es Programmcodeanweisungen zur Durchführung des Verfahrens nach einem der vorhergehenden Ansprüche umfasst, wenn das Programm auf einem Controller ausgeführt wird.

10. Hybridantriebssystem für ein Fahrzeug, das aus mindestens einer elektrischen Maschine und mindestens einem Dieselmotor gebildet ist, **dadurch gekennzeichnet, dass** das Antriebssystem von dem Steuerungsverfahren nach einem der Ansprüche 1 bis 08 gesteuert wird.

11. System nach Anspruch 10, wobei die Steuerung des Antriebssystems während eines Übergangsverhaltens mit einem quasistatischen Energieüberwacher kaskadiert ist.

12. Fahrzeug, insbesondere Automobil, das **dadurch gekennzeichnet, dass** es ein Hybridantriebssystem nach einem der Ansprüche 10 oder 11 umfasst.

**Claims**

1. A method of controlling a hybrid drive system consisting of at least one electric machine and at least one diesel engine, wherein a static torque setpoint $\left( T_{eng,s}^{sp} \right)$ of said diesel engine is acquired and the following stages are carried out:

   - constructing a nitrogen oxides (NOx) emission model allowing to estimate the emissions of said diesel engine as a function of a torque ($T_{eng}$) of said diesel engine,
   - calculating a dynamic NOx emission setpoint $\left( NO_x^{sp} \right)$ from said NOx emission model and from said static torque setpoint $\left( T_{eng,s}^{sp} \right)$ of said diesel engine,
   - deducing a dynamic torque setpoint of said diesel engine $\left( T_{eng}^{sp} \right)$ from NOx emission setpoint $\left( NO_x^{sp} \right)$,
   - determining a dynamic torque setpoint of said electric machine $\left( T_{mot}^{sp} \right)$ as a function of said dynamic torque setpoint of the diesel engine $\left( T_{eng}^{sp} \right)$, and
   - applying the dynamic torque setpoints to said drive system.

2. A method as claimed in claim 1, wherein said nitrogen oxides emission model is a function of the diesel engine speed and of the maximum temperature in the engine cylinder.

3. A method as claimed in any one of claims 1 or 2, wherein said diesel engine is equipped with an exhaust gas recirculation system leading burnt gas into an intake manifold, upstream from a cylinder of said diesel engine, said NOx emission model being a function of the burnt gas fraction $\left( F_1^{est} \right)$ in the intake manifold of said diesel engine.

4. A method as claimed in any one of claims 1 to 3, wherein the NOx emissions are modelled by the formula:

$$ NO_x = \alpha_1 \left( \frac{N_e}{\alpha_2} \right)^{\alpha_3} \left( \alpha_4 \left( \hat{T}_{cyl} - \alpha_5 \right) \right)^{\alpha_6 (1 - \alpha_7 F_1)} $$

with:

   $\alpha_1$ to $\alpha_7$ : calibration coefficients of the NOx model,
   $N_e$ : diesel engine speed,
   $\hat{T}_{cyl}$ : maximum temperature in the engine cylinder,
   $F_1$ : burnt gas fraction in the intake manifold if the diesel engine is equipped with an exhaust gas recirculation circuit, this value being zero otherwise, and
   $NO_x$ : NOx emissions level.

5. A method as claimed in any one of the previous claims, wherein a NOx emission threshold is defined for the diesel engine, the NOx emission setpoint $\left( NO_x^{sp} \right)$ being calculated as a function of said threshold.

6. A method as claimed in any one of claims 1 to 4, wherein a NOx emission reduction factor ($\xi$) is set, the NOx emission setpoint $\left( NO_x^{sp} \right)$ being calculated as a function of said reduction factor ($\xi$).

7. A method as claimed in any one of the previous claims, wherein deduction of the dynamic torque setpoint of the diesel engine is obtained by inverting the NOx emission model.

8. A method as claimed in any one of the previous claims, wherein said static torque setpoint $\left( T_{eng,s}^{sp} \right)$ of said diesel engine is obtained from a drive system torque setpoint $\left( T_{pwt}^{sp} \right)$ by an energy supervisor, notably a quasi-static energy supervisor the hybrid drive system is equipped with.

9. A computer program product downloadable from a communication network and/or recorded on a computer readable medium and/or controller executable, comprising program code instructions for implementing the method as claimed in any one of the previous claims when said program is executed on a controller.

10. A hybrid drive system for a vehicle consisting of at least one electric machine and at least one diesel engine, **characterized in that** the drive system is controlled by the control method as claimed in any one of claims 1 to 8.

11. A system as claimed in claim 10, wherein control of the drive system in transient state is cascaded with respect to a quasi-static energy supervisor.

12. A vehicle, notably a motor vehicle, **characterized in that** it comprises a hybrid drive system as claimed in any one of claims 10 or 11.

**Figure 1a)**

**Figure 1b)**

## Figure 1c)

## Figure 1d)

## Figure 2a)

## Figure 2b)

## Figure 3

Couple moteur (Nm)

temps (s)

NOx (g/s)

temps (s)

## Figure 4

## Figure 5a)

$$T_{eng,s}^{sp}$$

$$N_e$$

Modèle d'émissions de NOx

$$NO_x^s$$

## Figure 5b)

$$N_e$$

$$T_{eng,s}^{sp}$$
$$F_1^{sp}$$
$$N_e$$

Définition de la consigne de NOx

$$NO_x^{sp}$$

Calcul de la température cylindre

$$\hat{T}_{cyl}^{dyn}$$

Calcul de la demande de couple

$$T_{eng}^{sp}$$

$$F_1^{est}$$

Estimation de la fraction de gaz brûlé à l'admission

$$N_e$$

## Figure 6

$$\overline{NO}_x$$

$$\xi$$

$$NO_x^{sp}$$

$$\Delta NO_x$$

$$NO_x^s$$

t (s)

## Figure 7

## Figure 8a)

**Figure 8b)**

**Figure 8c)**

## Figure 8d)

## Figure 8e)

**Figure 8f)**

**Figure 9**

**Figure 10**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060270519 A

- FR 2926518

**Littérature non-brevet citée dans la description**

- **A. SCIARRETTA ; M. BACK ; L. GUZZELLA.** Optimal control of parallel hybrid electric vehicles. *IEEE Transactions on Control Systems Technology,* Mai 2004, vol. 12 (3
- **A. CHASSE ; A. SCIARRETTA ; J. CHAUVIN.** Online optimal control of a parallel hybrid with costate adaptation rule. *Proceedings of the IFAC Symposium on Advances in Automotive Control,* 12 Juillet 2010
- **O. GRONDIN ; L. THIBAULT ; PH. MOULIN ; A. CHASSE ; A. SCIARRETTA.** Energy Management Strategy for Diesel Hybrid Electric Vehicle. *Proceedings of the 7th IEEE Vehicle Power and Propulsion Conference,* 06 Septembre 2011
- **N. LINDENKAMP, C.-P. ; STÖBER-SCHMIDT ; P. EILTS.** Strategies for Reducing NOx and Particulate Matter Emissions in Diesel Hybrid Electric Vehicles. *SAE Paper,* 2009

- **O. PREDELLI ; F. BUNAR ; J. MANNS ; R. BUCHWALD ; A. SOMMER.** Laying Out Diesel-Engine Control Systems in passenger-Car Hybrid Drives. *Proceedings of the IAV conference on Hybrid Vehicle and Energy Management,* 14 Février 2007, 131-151
- **J.-C. SCHMITT ; M. FREMOVICI ; O. GRONDIN ; F. LE BERR.** Compression Ignition Engine Model Supporting Powertrain Development. *Proceedings of the IFAC workshop on engine and powertrain control, simulation and modeling,* 30 Novembre 2009
- **R. LEBAS ; G. MAUVIO ; F. LE BERR ; A. ALBRECHT.** A phenomenological approach to model diesel engine combustion and in-cylinder pollutant emissions adapted to control strategy. *Proceedings of the IFAC workshop on engine and powertrain control, simulation and modeling,* 30 Novembre 2009
- **GRONDIN ; L. THIBAULT ; PH. MOULIN ; A. CHASSE ; A. SCIARRETTA.** Energy Management Strategy for Diesel Hybrid Electric Vehicle. *Proceedings of the 7th IEEE Vehicle Power and Propulsion Conference,* 06 Septembre 2011